# EUROPÄISCHE PATENTSCHRIFT

(11) **EP 4 269 838 B1**
(45) Veröffentlichungstag und Bekanntmachung des Hinweises auf die Patenterteilung: **29.07.2026**
(21) Anmeldenummer: 22170603.9
(22) Anmeldetag: 28.04.2022
(51) Int. Cl.: F16H 57/027, F16H 61/00, F16H 63/34

(54) **GETRIEBEEINRICHTUNG FÜR EIN FAHRZEUG**
TRANSMISSION DEVICE FOR A VEHICLE
DISPOSITIF DE TRANSMISSION POUR UN VÉHICULE

(43) Veröffentlichungstag der Anmeldung: 01.11.2023
(73) Patentinhaber: Valeo Electrification, 95892 Cergy Pontoise (FR)
(72) Erfinder: Fürstenhöfer, Christian, 91056 Erlangen (DE); Haas, Bernd, 91056 Erlangen (DE)
(74) Vertreter: Valeo Powertrain Systems

(56) Entgegenhaltungen:
- WO-A1-2021/105082
- DE-A1- 102008 005 395
- DE-A1- 102018 133 266
- DE-A1- 102019 126 269

## Beschreibung

Die Erfindung betrifft eine Getriebeeinrichtung für ein Fahrzeug, umfassend ein in einem Getriebegehäuse aufgenommenes Getriebe, einen in dem Getriebegehäuse angeordneten Aktuator, insbesondere einen Parksperrenaktuator mit einer Sperrklinke, die in eine Sperrverzahnung eines Parksperrenrads des Getriebes in Eingriff bringbar ist. Die Getriebeeinrichtung umfasst auch eine Druckausgleichseinrichtung zum Verbinden des Innenraums des Aktuators mit einer außerhalb des Getriebegehäuses herrschenden Atmosphäre.

Parksperren werden bei Kraftfahrzeugen mit einem automatischen Getriebe eingesetzt. Ein bewegbares Arretierungsmittel wirkt dabei auf ein Parksperrenrad, das über Getriebekomponenten mit einem Rad des Kraftfahrzeugs verbunden ist. Das Arretierungsmittel wird durch einen elektromotorisch angetriebenen Parksperrenaktuator betätigt. Im gesperrten Zustand blockiert die Parksperre das Rad des Kraftfahrzeugs. Der Parksperrenaktuator ist in dem mit Getriebeöl gefüllten Getriebegehäuse angeordnet. In der Praxis hat es sich gezeigt, dass unter ungünstigen Umständen Getriebeöl in den Parksperrenaktuator eindringen kann, beispielsweise wenn in dem Parksperrenaktuator ein geringerer Druck im Vergleich zu dem Druck im Inneren des Getriebegehäuses vorliegt. Ähnliche Probleme ergeben sich auch bei anderen Aktuatoren, die in einem Getriebegehäuse angeordnet sind, z. B. bei einer in einem Getriebegehäuse angeordneten Pumpe oder bei einem Aktuator einer Unterbrechungseinheit.

Das Dokument WO2021105082 A1**,** auf welchem die zweiteilige Anspruchsfassung basiert, beschreibt eine Getriebeeinrichtung für ein elektrischen antreibbares Fahrzeug, elektrisch verbunden ist, mit eine Druckausgleichsvorrichtung, die durch den Steckverbinder der Anschlussvorrichtung verläuft und eine gasdurchlässige Verbindung zwischen dem Inneren des Parksperrenaktuators und dem Äußeren des Getriebegehäuses ausbildet.

Das Dokument DE 10 2018 133 266 A1 beschreibt eine Getriebeeinrichtung mit einem Parksperrenaktuator, der eine Druckausgleichsschnittstelle aufweist, über die der Innenraum des Parksperrenaktuators flüssigkeitsdicht mit der außerhalb des Getriebegehäuses herrschenden Atmosphäre verbunden ist. Auf diese Weise kann die Entstehung eines Unterdrucks aufgrund von Temperaturänderungen und in der Folge das Eindringen von Getriebeöl in das Gehäuse des Parksperrenaktuators verhindert werden.

Der Erfindung liegt die Aufgabe zugrunde, eine Getriebeeinrichtung anzugeben, die zuverlässig einen Druckausgleich zwischen dem Innenraum des Aktuators, insbesondere des Parksperrenaktuators, und der das Getriebegehäuse umgebenden Atmosphäre ermöglicht.

Die oben erwähnte Aufgabe wird mit einer Getriebeeinrichtung nach Anspruch 1 gelöst.

Besondere Ausführungsarten der Erfindung sind in den abhängigen Ansprüchen dargelegt.

Die Erfindung beruht auf der Erkenntnis, dass Funktionsausfälle des Aktuators als Bestandteil der erfindungsgemäßen Getriebeeinrichtung häufig auf das Eindringen von Getriebeöl in den Aktuator zurückzuführen sind. Dies wird durch einen Druckunterschied zwischen dem Inneren des Aktuators und der Außenseite des Getriebegehäuses verursacht. Durch die Druckausgleichseinrichtung wird ein Druckausgleich zwischen dem Inneren des Aktuators und dem Äußeren des Getriebegehäuses realisiert und dadurch ein Eindringen von Getriebeöl verhindert. Auf diese Weise wird ein robuster, störungsfreier Betrieb der Getriebeeinrichtung ermöglicht.

Erfindungsgemäß mündet der Schlauch der Druckausgleichseinrichtung in einem Steckverbinder. Vorzugsweise ist der Steckverbinder mit einem anderen Steckverbinder verbunden, der eine Öffnung des Getriebegehäuses verschließt. Um zu verhindern, dass der Schlauch in Axialrichtung aus dem Steckverbinder herausgezogen wird, weist der Schlauch erfindungsgemäß einen Flansch am Ende des Schlauchs auf, der den Schlauch in Längsrichtung in dem Steckverbinder fixiert.

Der in dieser Anmeldung verwendete Begriff "Schlauch" ist breit zu verstehen und umfasst jegliche flexible oder starre Leitungen, Rohrleitungen und sonstige hohle Bauteile mit zwei voneinander beabstandeten Öffnungen, die einen Druckausgleich ermöglichen.

Vorzugsweise ist vorgesehen, dass der Schlauch den Flansch aufweist, der in einer entsprechenden Ausnehmung des Steckverbinders aufgenommen ist. Dieser Flansch verhindert ein Herausziehen des Schlauchs bei der Montage der Getriebeeinrichtung oder beispielsweise im Rahmen von Wartungsarbeiten. Somit ist sichergestellt, dass der Schlauch und der Steckverbinder stets fest miteinander verbunden sind und dass deren Relativposition unveränderlich ist.

Gemäß der vorliegenden Erfindung, weist der Steckverbinder ein als Gleitteil ausgebildetes Sicherungselement **auf,** das zum Einsetzen in ein Gehäuse des Steckverbinders ausgebildet **ist** und durch eine gleitende Bewegung zwischen einer ersten und einer zweiten Position verschoben werden kann, um die Position des Schlauchs in Längsrichtung zu sichern, wobei das Sicherungselement einen Schlitz besitzt. Der Schlitz ist mit einer ersten Breite vorgesehen, die ein Einsetzen des Flansches ermöglicht, wenn das Sicherungselement sich in **der** besagten ersten Position befindet. Der Schlitz ist zusätzlich mit einer zweiten Breite vorgesehen, die kleiner als die erste Breite ist, um ein Einsetzen oder Verschieben des Flansches zu verhindern, wenn sich das Sicherungselement in der besagten zweiten Position befindet.

Vorzugsweise ist vorgesehen, dass an dem Steckverbinder ein Kabelbaum angebracht ist, in dem der Schlauch wenigstens teilweise aufgenommen ist, wobei der Kabelbaum eine Mehrzahl von elektrischen Leitungen umfasst, die über den Steckverbinder im Inneren des Getriebes, vorzugsweise an den Aktuator oder an eine Pumpe, angeschlossen sind.

Vorzugsweise besitzen die elektrischen Leitungen ebenfalls einen Flansch, so dass sie auch durch das Sicherungselement gesichert sind.

Eine Weiterbildung der Erfindung sieht vor, dass der Schlauch von einer rohrförmigen Einzeladerabdichtung umgeben ist. Durch die in dem Steckverbinder aufgenommene Einzeladerabdichtung ist eine Abdichtung zwischen dem Schlauch und dem Steckverbinder gebildet. Diese Einzeladerabdichtung dichtet die Schnittstelle zwischen Schlauch und Steckverbinder ab und weist einen gegenüber dem Schlauch vergrößerten Außendurchmesser auf. Beim Fügen der Einzeladerabdichtung mit dem Steckverbinder kommt es aufgrund der Elastizität der Einzeladerabdichtung zu einer Verformung der Einzeladerabdichtung, welche radial umlaufende Rippen aufweisen kann, wodurch eine Abdichtung gegenüber der Umgebung erzeugt wird. Die Einzeladerabdichtung kann zum Beispiel aus Silikon hergestellt sein.

Eine Weiterbildung der Erfindung sieht vor, dass der Schlauch ein verformbares Klemmelement aus einem Metallmaterial aufweist. Das Klemmelement dient dazu, die Einzeladerabdichtung in einer korrekten axialen Position auf dem Schlauch zu fixieren. Das Klemmelement verbindet die Einzeladerabdichtung mit dem Schlauch. Vorzugsweise ist das Klemmelement durch Crimpen mit dem Schlauch und der Einzeladerabdichtung verbunden. Da die Einzeladerabdichtung in Axialrichtung fest mit dem Schlauch verbunden ist, kann sie nicht herausgezogen werden.

Im Rahmen der Erfindung ist es auch möglich, dass die Einzeladerabdichtung einen, zwei oder drei voneinander beabstandete, als Rippen ausgebildete Abschnitte mit vergrößertem Außendurchmesser aufweist, der oder die formschlüssig in entsprechende Ausnehmungen des Steckverbinders eingesetzt ist oder sind. Das Vorsehen mehrerer voneinander beabstandeter Abschnitte erhöht die Dichtigkeit des Schlauchs zum Steckverbinder.

Es kann auch vorgesehen sein, dass das Klemmelement einen ersten sich in Längsrichtung der Einzeladerabdichtung erstreckenden Abschnitt und zwei voneinander beabstandete, dazu senkrechte, ein- oder beidseitig abstehende zweite Abschnitte aufweist, die im geklemmten Zustand den Schlauch bzw. die Einzeladerabdichtung umgeben. Das Klemmelement weist den ersten Abschnitt auf, der sich in Längsrichtung der Einzeladerabdichtung und des Schlauchs erstreckt, senkrecht zu diesem ersten Abschnitt erstrecken sich ein- oder beidseitig zweite Abschnitte, die durch Crimpen um den Schlauch und die Einzeladerabdichtung gebogen werden. Durch Verformen des Klemmelements, dem Crimpen, wird ein fester Halt zwischen dem Schlauch und der Einzeladerabdichtung erzeugt. Das Crimpen erfolgt in an sich bekannter Weise mit einem dafür vorgesehenen Werkzeug, zum Beispiel einer Crimpzange.

Die erfindungsgemäße Getriebeeinrichtung kann so ausgebildet sein, dass durch die in dem Steckverbinder aufgenommene Einzeladerabdichtung eine Abdichtung zwischen dem Schlauch und dem Steckverbinder gebildet ist. Diese Abdichtung verhindert, dass Schmutzpartikel von außen in das Innere des Getriebegehäuses eingetragen werden. Gleichzeitig wird verhindert, dass Medien, die sich im Inneren des Getriebegehäuses befinden, wie Getriebeöl oder Ölnebel, nach außen gelangen können.

Ein in Richtung des freien Endes des Schlauchs weisendes Ende des Klemmelements umgibt vorzugsweise das Ende des Schlauchs und bildet mindestens teilweise den Flansch aus.

Vorzugsweise bildet das Ende des Schlauchs mindestens teilweise den Flansch aus.

Im Hinblick auf die Einzeladerabdichtung wird es bevorzugt, dass dieser aus einem elastischen Kunststoffmaterial hergestellt ist. Ein Beispiel dafür ist ein Silikonmaterial. Dasselbe gilt für den Schlauch, der ebenfalls aus einem Kunststoffmaterial hergestellt sein kann. Es wird bevorzugt, dass sowohl die Einzeladerabdichtung als auch der Schlauch aus einem flexiblen Kunststoffmaterial bestehen.

Der Schlauch der erfindungsgemäßen Getriebeeinrichtung kann zwei Flansche aufweisen. Das mit dem Flansch versehene Ende ist in den Steckverbinder eingesetzt. Das andere, entgegengesetzte Ende des Schlauchs kann ebenfalls in einen Steckverbinder eingesetzt sein. Vorzugsweise verbindet der Schlauch einen außen am Getriebegehäuse angebrachten Steckverbinder mit einer Membran, die Bestandteil einer Druckausgleichsvorrichtung ist.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: eine Antriebseinrichtung für ein Fahrzeug, die die erfindungsgemäße Getriebeeinrichtung beinhaltet;
- Fig. 2: den in einem Getriebegehäuse aufgenommenen Parksperrenaktuator;
- Fig. 3: einen Kabelbaum mit zwei Steckverbindern;
- Fig. 4: ein Sicherungselement eines Steckverbinders;
- Fig. 5A - 5C: Endabschnitte eines Schlauchs gemäß einer ersten Variante;
- Fig. 5D: eine geschnittene Ansicht des Endabschnitts;
- Fig. 6: eine perspektivische Ansicht des Endabschnitts;
- Fig. 7A - 7C: Endabschnitte eines Schlauchs gemäß einer zweiten Variante;
- Fig. 7D: eine geschnittene Ansicht des Endabschnitts; und
- Fig. 8: eine perspektivische Ansicht des Endabschnitts.

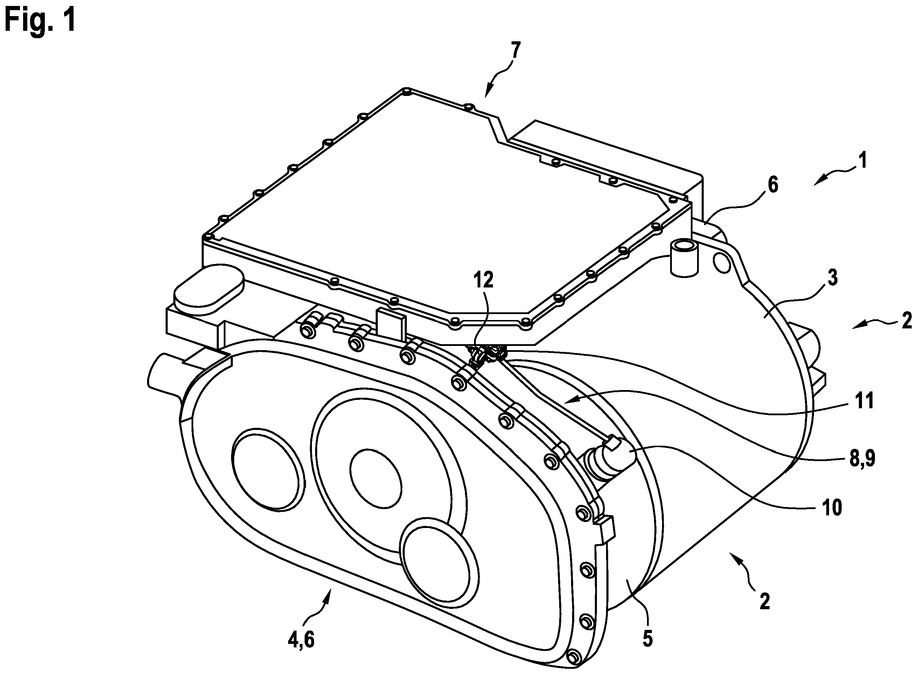

Fig. 1 zeigt eine Antriebseinrichtung 1 für ein Fahrzeug. Die Antriebseinrichtung 1 umfasst eine elektrische Maschine 2, die in einem Maschinengehäuse 3 aufgenommen ist. Eine Drehbewegung eines Rotors der elektrischen Maschine 2 wird auf ein Getriebe 4 übertragen. Das Getriebe 4 ist in einem Getriebegehäuse 5 aufgenommen, das Getriebe 4 und das Getriebegehäuse 5 bilden zusammen eine Getriebeeinrichtung **6,** die die vorliegende Erfindung darstellt.

Daneben ist in Fig. 1 erkennbar, dass oberhalb der elektrischen Maschine 2 ein Inverter 7 angeordnet ist.

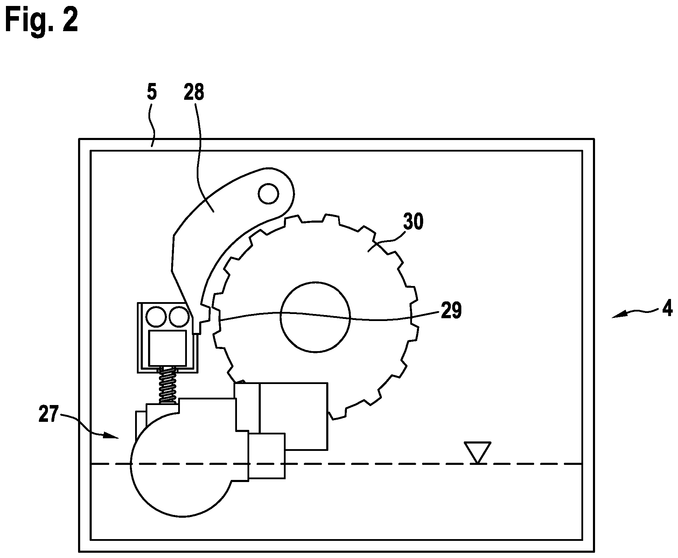

In Fig. 2 ist dargestellt, dass in dem Getriebegehäuse 5 ein Parksperrenaktuator 27 aufgenommen ist, der eine Sperrklinke 28 aufweist, die um eine Drehachse schwenkbar ist. Wenn der Parksperrenaktuator 27 betätigt wird, wird die Sperrklinke 28 geschwenkt, sodass sie in eine Sperrverzahnung 29 eines Parksperrenrads 30 des Getriebes 4 in Eingriff gebracht wird. Das Parksperrenrad 30 ist über nicht dargestellte Zahnräder und Wellen mit einem angetriebenen Rad des Fahrzeugs verbunden, dessen Drehung auf diese Weise blockiert wird. In diesem gesperrten Zustand kann das Fahrzeug nicht bewegt werden.

Die erfindungsgemäße Getriebeeinrichtung 6 weist eine Druckausgleichseinrichtung auf, die einen Schlauch 8 aufweist, der Bestandteil eines Kabelbaums 9 ist. In Fig. 1 erkennt man, dass sich der außenliegende Kabelbaum 9 zwischen einem Steckverbinder 10 und einem weiteren Steckverbinder 11 erstreckt. Über den Kabelbaum 9 ist das Getriebe 4 mit dem Inverter 7 verbunden. Der Schlauch 8 erstreckt sich über den Kabelbaum 9 hinaus bis zu einer Membran 12.

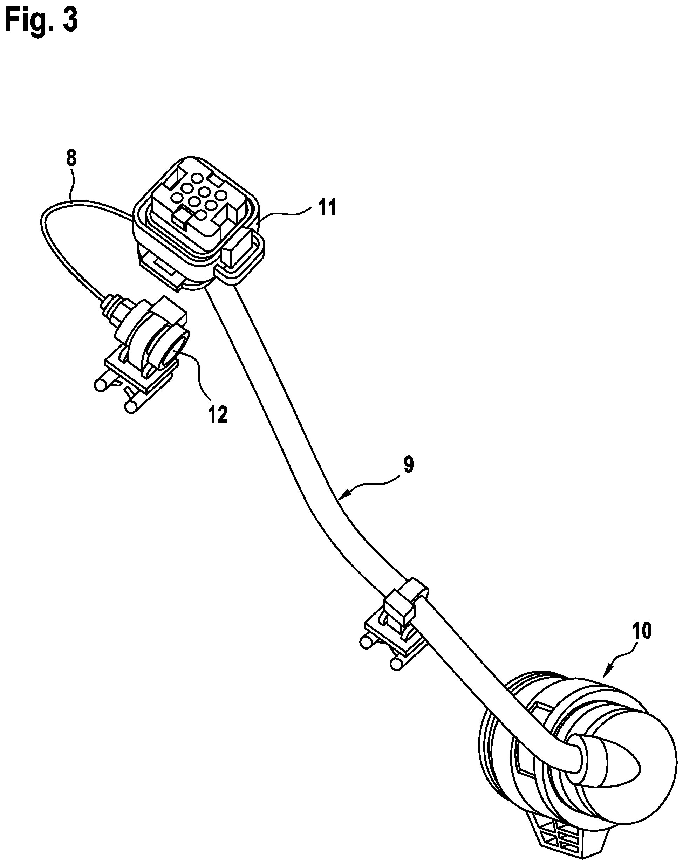

Fig. 3 zeigt den Kabelbaum 9 in einem vergrößerten Maßstab. An einem Ende des Kabelbaums 9 befindet sich der Steckverbinder 10, der mit einem dazu passenden Steckverbinder (nicht gezeigt) an der Außenseite des Getriebegehäuses 5 verbindbar ist. Am anderen Ende des Kabelbaums 9 befindet sich der Steckverbinder 11, der mit einem dazu passenden Steckverbinder des Inverters 7 verbindbar ist. Der Kabelbaum 9 umfasst eine Mehrzahl von elektrischen Leitungen 18, die zur Steuerung des Parksperrenaktuators 27 dienen. In den Kabelbaum 9 ist der Schlauch 8 integriert. Der Schlauch 8 erstreckt sich über den Steckverbinder 11 hinaus bis zu der Membran 12, die an der Außenseite des Getriebegehäuses 5 befestigt ist.

Der Schlauch 8 ist über den Steckverbinder 10 mit einem weiteren Schlauch verbunden, der im Inneren des Getriebegehäuses 5 angeordnet ist. Dieser weitere Schlauch erstreckt sich bis zu dem Parksperrenaktuator. Im montierten und gekoppelten Zustand ist eine flüssigkeitsdichte Verbindung zwischen dem Gehäuse des Parksperrenaktuators und der das Getriebegehäuse 5 umgebenden Atmosphäre ausschließlich durch die Druckausgleichseinrichtung gebildet.

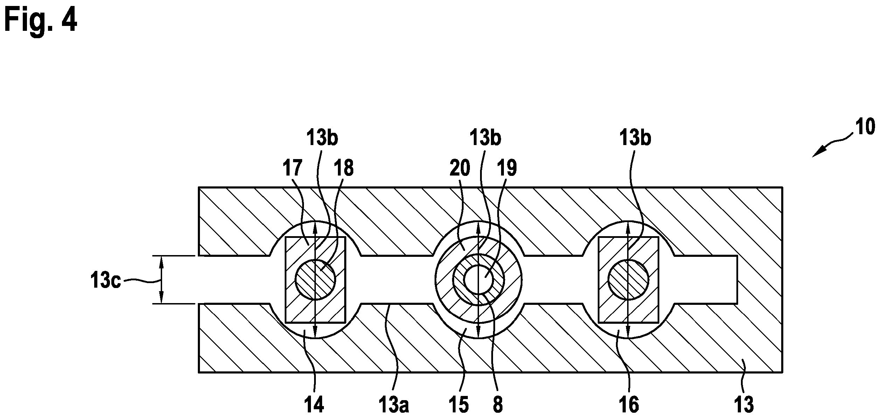

Der Steckverbinder 10 umfasst ein Sicherungselement 13, das in Fig. 4 dargestellt ist. Am Ende des Schlauchs 8 befindet sich ein Flansch 20. Das Sicherungselement 13 besitzt gemäß der vorliegenden Erfindung einen Schlitz 13a mit einer ersten Breite 13b, die ein Einsetzen des Flansches 20 ermöglicht, wenn das Sicherungselement 13 sich in einer ersten Position befindet. Zusätzlich weist der Schlitz 13a eine zweite Breite 13c auf, die kleiner als die erste Breite 13b ist, um ein Einsetzen oder Verschieben des Flansches 20 zu verhindern, wenn sich das Sicherungselement 13 in einer zweiten Position befindet. Durch eine gleitende Bewegung kann das Sicherungselement 13 zwischen der ersten und der zweiten Position verschoben werden.

Insbesondere weist der Teil des Schlitzes 13a mit der ersten Breite 13b eine Mehrzahl von näherungsweise kreisförmigen Ausnehmungen 14, 15, 16 auf. In den äußeren Ausnehmungen 14, 16 ist jeweils eine elektrische Leitung 18 angeordnet. Insbesondere umfasst die elektrische Leitung 18 einen aus Metallmaterial hergestellten Kabelanschluss (terminal), in dessen Inneren sich eine Kabellitze befindet. In der mittleren Ausnehmung 15 befindet sich der Schlauch 8, der ein Volumen 19 umgibt, das den Druckausgleich ermöglicht. Es wird bevorzugt, dass die elektrische Leitungen 18 ebenfalls einen Flansch 17 besitzen. Mittels des Sicherungselements 13 werden sowohl die elektrischen Leitungen 18 als auch der Schlauch 8 axial in dem Steckverbinder 10 fixiert. Der Flansch 17, 20 verhindert ein unerwünschtes Herausziehen des Schlauchs 8 oder der elektrischen Leitungen 18 aus dem Kabelbaum 9 oder dem Sicherungselement 13.

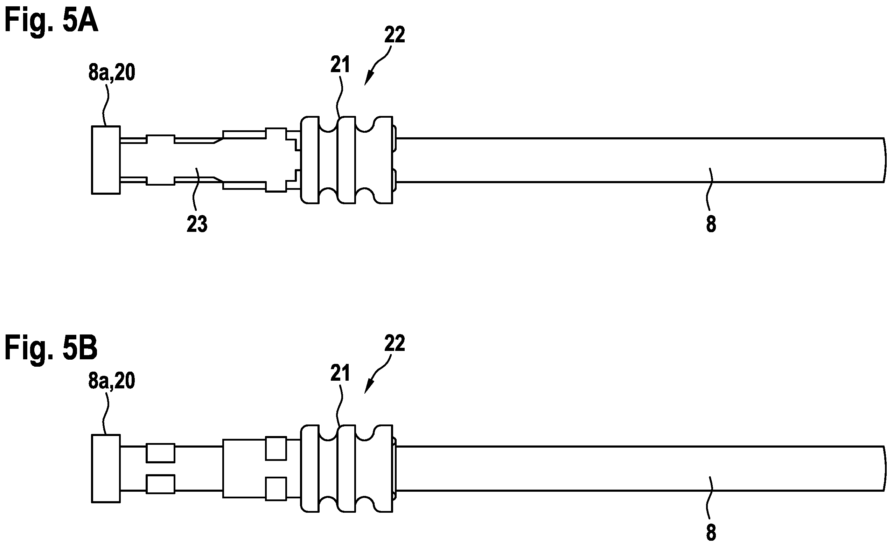

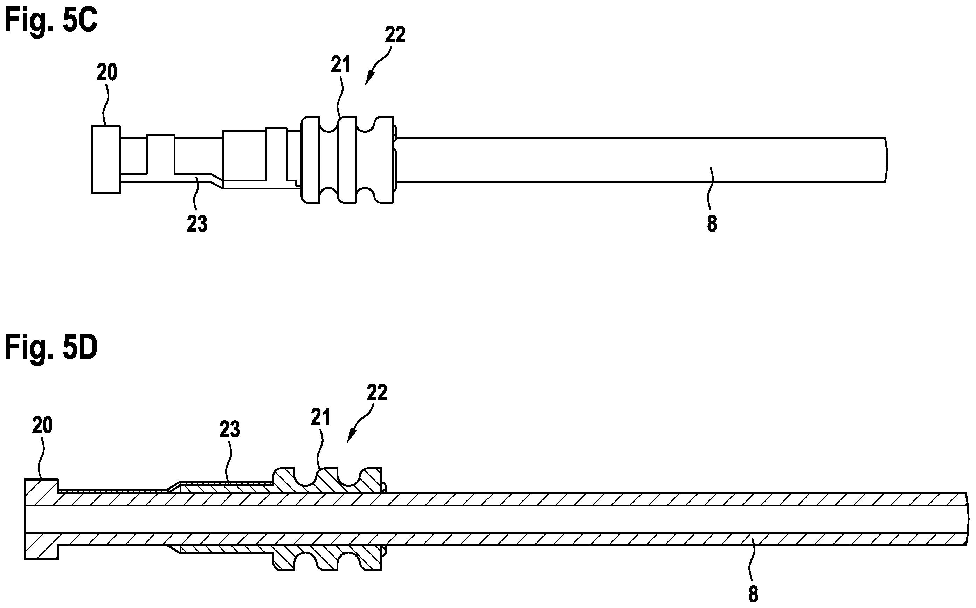

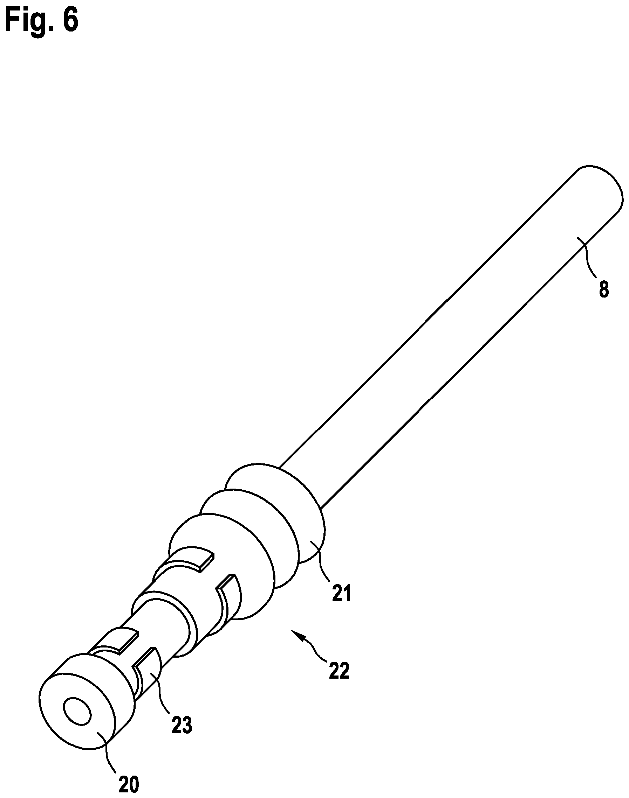

Die Fig. 5A bis 5D sowie Fig. 6 zeigen einen Endabschnitt des Schlauchs 8, der den Flansch 20 aufweist. Dabei zeigt Fig. 5A eine Draufsicht auf ein Klemmelement, Fig. 5B ist eine bezogen auf die Längsachse des Schlauchs 8 um 180° gedrehte Ansicht, Fig. 5C ist eine bezogen auf Fig. 5A um 90° gedrehte Ansicht und Fig. 5D ist eine geschnittene Ansicht von Fig. 5C. Fig. 6 zeigt schließlich eine perspektivische Ansicht des als Flansch 20 ausgebildeten Endabschnitts des Schlauchs 8.

Ein Klemmelement 23 fixiert den Schlauch 8 und die Einzeladerabdichtung 22 in Längsrichtung. Die Einzeladerabdichtung 22 weist eine dichtungstypische Geometrie zum Dichten mit einer gegengleichen Kontur im Steckverbindergehäuse 13 auf. In dem dargestellten Ausführungsbeispiel weist die Einzeladerabdichtung 22 drei voneinander beabstandete Abschnitte 21 mit vergrößertem Durchmesser auf. Zwischen zwei benachbarten Abschnitten 21 mit vergrößertem Durchmesser ist der Durchmesser der Einzeladerabdichtung 22 verringert. Neben den Abschnitten 21 erstreckt sich in Richtung des freien Endes des Schlauchs 8 ein Abschnitt mit konstantem Durchmesser, der den Schlauch 8 umgibt. Die Einzeladerabdichtung 22 ist aus einem elastischen Kunststoffmaterial hergestellt.

Insbesondere ist das Klemmelement 23 aus einem Metallmaterial hergestellt. Das Klemmelement 23 umfasst einen ersten sich in Längsrichtung des Schlauchs 8 erstreckenden Abschnitt und zwei voneinander beabstandete, dazu senkrechte beidseitig abstehende Abschnitte, die im gecrimpten Zustand den Schlauch 8 umgeben. Die beiden senkrechten Abschnitte können auch axial versetzt angeordnet sein. Es können auch weitere senkrechte Abschnitte vorgesehen sein. Das Klemmelement 23 ist vorgebogen und wird in diesem Zustand in ein Werkzeug wie eine Crimpzange eingesetzt. Beim Crimpvorgang werden die beiden beidseitig abstehenden Abschnitte um den Schlauch 8 bzw. die Einzeladerabdichtung 22 gebogen. In diesem verpressten Zustand umgreifen die beidseitig abstehenden Abschnitte des Klemmelements 23 die Einzeladerabdichtung 22 sowie den Schlauch 8 fest, sodass die Einzeladerabdichtung 22 fest mit dem Schlauch 8 verbunden ist. In der perspektivischen Ansicht von Fig. 6 erkennt man, dass der Schlauch 8 ein rundes bzw. scheibenförmiges, als Flansch 20 ausgebildetes freies Ende aufweist. Das Klemmelement 23 dient zudem zur axialen Positionierung der Einzeladerabdichtung 22 auf dem Schlauch 8. Bei der Montage dient das Klemmelement 23 als axialer Abstandshalter zwischen dem Flansch 20 und der Einzeladerabdichtung 22 und wird axial an den Flansch 20 angelegt.

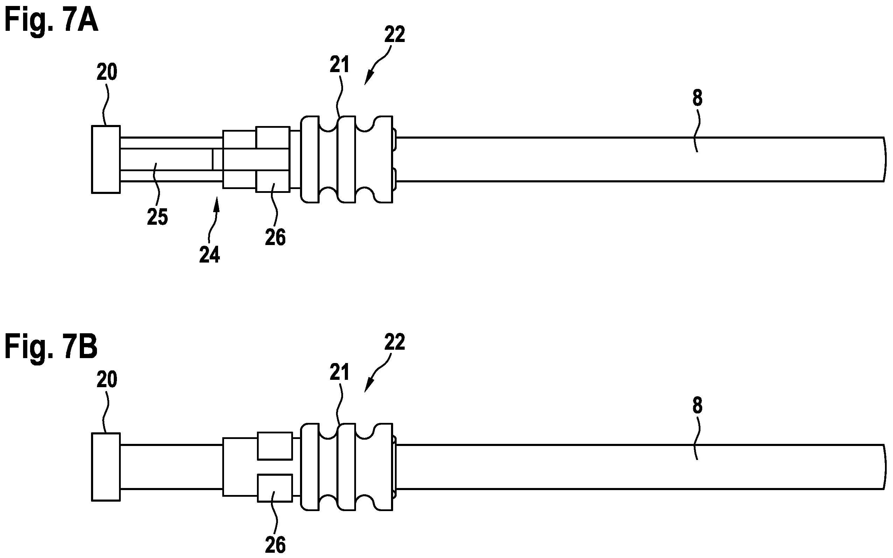

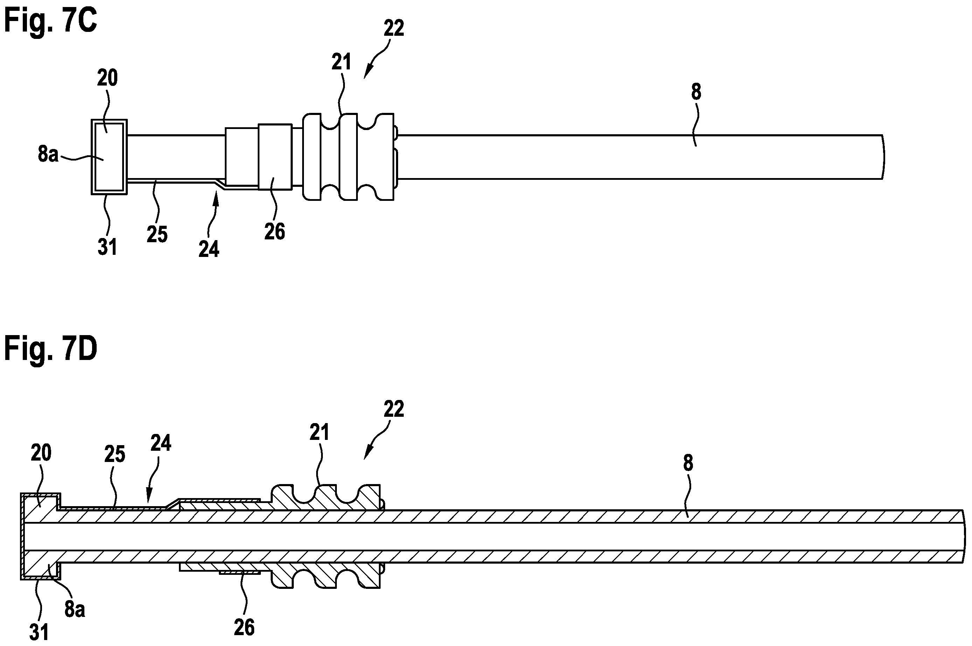

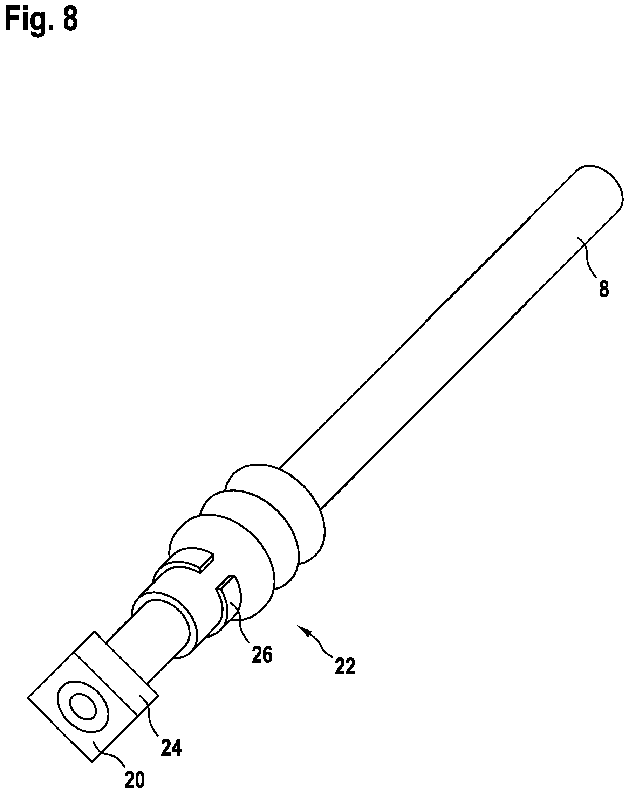

Die Fig. 7A bis 7D sowie Fig. 8 zeigen einen Endabschnitt des Schlauchs 8, der mit einem Klemmelement gemäß einer zweiten Variante versehen ist. Nachfolgend werden nur solche Merkmale erläutert, die sich von dem in den Fig. 5 und 6 dargestellten Klemmelement unterscheiden.

Der Schlauch 8 ist in Übereinstimmung mit dem vorangehenden Ausführungsbeispiel mit der Einzeladerabdichtung 22 versehen, die die drei voneinander beabstandeten Abschnitte 21 mit vergrößertem Durchmesser aufweist. Ein als Haltemittel dienendes Klemmelement 24 weist einen ersten sich in Längsrichtung erstreckenden Abschnitt 25 und zwei dazu senkrechte beidseitig abstehende Abschnitte 26 auf. Anders als das erste Ausführungsbeispiel umfasst das Klemm element 24 somit nur ein Paar von senkrecht abstehenden Abschnitten 26, die im gecrimpten Zustand den Schlauch 8 und einen Teil der Einzeladerabdichtung 22 umgreifen. Das in Richtung des freien Endes des Schlauchs 8 weisende Ende 31 des Klemmelements 24 umgibt das als Flansch ausgebildete Ende 8a des Schlauchs 8. Das Klemmelement 24 ist insbesondere quaderförmig ausgebildet. Das Ende 31 verstärkt den Flansch 20. Dies ist insbesondere vorteilhaft, wenn das als Flansch ausgebildete Ende 8a des Schlauchs 8 aus einem verformbaren Material hergestellt ist, beispielsweise aus einem ähnlichen oder dem gleichen Material wie der Schlauch 8. Deshalb verhindert das Ende 31, dass der Schlauch 8 aufgrund einer Verformung des Endes 8a herausgezogen werden kann. Indem die senkrecht abstehenden Abschnitte 26 die Einzeladerabdichtung 22 gegen den Schlauch 8 pressen, ist ein sicherer Halt und ein Schutz vor dem Herausziehen gewährleistet.

Alternativ muss das Ende 8a des Schlauchs 8 nicht zu dem Flansch 20 umgeformt werden. Bei Verwendung des Endes 31 des Klemmelements 24, kann der Schlauch 8 auch gerade bleiben. Die Funktion des Verhinderns des Herausziehens kann trotzdem durch das Ende 31 des Klemmelements 24 gewährleistet werden, da das Klemmelement 24 fest mit dem Schlauch 8 vercrimpt ist.

Der Aktuator kann auch ein anderer Typ als ein Parksperrenaktuator sein. Zum Beispiel kann der Aktuator eine in einem Getriebegehäuse angeordnete Pumpe oder ein Aktuator einer Unterbrechungseinheit eines Getriebes sein.

### Bezugszeichenliste

- 1: Antriebseinrichtung
- 2: elektrische Maschine
- 3: Maschinengehäuse
- 4: Getriebe
- 5: Getriebegehäuse
- 6: Getriebeeinrichtung
- 7: Inverter
- 8: Schlauch
- 8a: Ende des Schlauchs
- 9: Kabelbaum
- 10: Steckverbinder
- 11: Steckverbinder
- 12: Membran
- 13: Sicherungselement
- 13a: Schlitz
- 13b: erste Breite des Schlitzes
- 13: zweite Breite des Schlitzes
- 14: Ausnehmung
- 15: Ausnehmung
- 16: Ausnehmung
- 17: Kabelanschluss
- 18: Kabellitze
- 19: Volumen
- 20: Flansch
- 21: Abschnitt
- 22: Einzeladerabdichtung
- 23: Klemmelement
- 24: Klemmelement
- 25: Abschnitt
- 26: Abschnitt
- 27: Parksperrenaktuator
- 28: Sperrklinke
- 29: Sperrverzahnung
- 30: Parksperrenrad
- 31: Ende

## Patentansprüche

1. Getriebeeinrichtung (6) für ein Fahrzeug, umfassend:
- ein in einem Getriebegehäuse (5) aufgenommenes Getriebe (4),
- einen in dem Getriebegehäuse (5) angeordneten Aktuator, insbesondere einen Parksperrenaktuator (27) mit einer Sperrklinke (28), die in eine Sperrverzahnung (29) eines Parksperrenrads (30) des Getriebes (4) in Eingriff bringbar ist,
- eine Druckausgleichseinrichtung zum Verbinden des Innenraums des Aktuators mit einer außerhalb des Getriebegehäuses (5) herrschenden Atmosphäre,
die Druckausgleichseinrichtung einen außerhalb des Getriebegehäuses (5) verlaufenden Schlauch (8) umfasst, der in einem an der Außenseite des Getriebegehäuses (5) angeordneten Steckverbinder (10) mündet,
**dadurch gekennzeichnet, dass** ein Flansch (20) am Ende (8a) des Schlauchs (8) derart ausgebildet ist, dass der Schlauch (8) in Längsrichtung in dem Steckverbinder (10) fixiert ist,
wobei der Steckverbinder (10) ein als Gleitteil ausgebildetes Sicherungselement (13) aufweist, das zum Einsetzen in ein Gehäuse des Steckverbinders (10) ausgebildet ist und durch eine gleitende Bewegung zwischen einer ersten und einer zweiten Position verschoben werden kann, um die Position des Schlauchs (8) in Längsrichtung zu sichern, wobei das Sicherungselement (13) einen Schlitz (13a) besitzt, wobei der Schlitz (13a) eine erste Breite (13b), die ein Einsetzen des Flansches (20) ermöglicht, wenn das Sicherungselement (13) sich in der besagten ersten Position befindet, und eine zweite Breite (13c), die kleiner als die erste Breite (13b) ist, um ein Einsetzen oder Verschieben des Flansches (20) zu verhindern, wenn sich das Sicherungselement (13) in der besagten zweiten Position befindet, aufweist.

2. Getriebeeinrichtung nach Anspruch 1, wobei der Flansch (20) in einer entsprechenden Ausnehmung des Steckverbinders (10) aufgenommen ist.

3. Getriebeeinrichtung nach einem der vorangehenden Ansprüche, wobei an dem Steckverbinder (10) ein Kabelbaum (9) angebracht ist, in dem der Schlauch (8) wenigstens teilweise aufgenommen ist, wobei der Kabelbaum (9) eine Mehrzahl von elektrischen Leitungen (18) umfasst, die über den Steckverbinder (10) im Inneren des Getriebes (4), vorzugsweise an den Aktuator, angeschlossen sind.

4. Getriebeeinrichtung nach Anspruch 3, wobei die elektrischen Leitungen (18) ebenfalls einen Flansch (17) besitzen, so dass sie durch das Sicherungselement (13) gesichert sind.

5. Getriebeeinrichtung nach einem der vorangehenden Ansprüche, wobei der Schlauch (8) von einer rohrförmigen Einzeladerabdichtung (22) umgeben ist, und wobei durch die in dem Steckverbinder (10) aufgenommene Einzeladerabdichtung (22) eine Abdichtung zwischen dem Schlauch (8) und dem Steckverbinder (10) gebildet ist.

6. Getriebeeinrichtung nach Anspruch 5, umfassend ein Klemmelement (23, 24), insbesondere aus einem Metallmaterial, wobei die Einzeladerabdichtung (22) durch Crimpen des Klemmelements (23, 24) mit dem Schlauch (8) verbunden ist.

7. Getriebeeinrichtung nach Anspruch 6, wobei das Klemmelement (23, 24) einen ersten sich in Längsrichtung des Schlauchs (8) erstreckenden Abschnitt und zwei voneinander beabstandete, dazu senkrechte, ein- oder beidseitig abstehende Abschnitte (25, 26) aufweist, die im gecrimpten Zustand den Schlauch (8) bzw. die Einzeladerabdichtung (22) umgeben.

8. Getriebeeinrichtung nach Anspruch 6 oder 7, wobei ein in Richtung des freien Endes des Schlauchs (8) weisendes Ende (31) des Klemmelements (24) das Ende (8a) des Schlauchs (8) umgibt und den Flansch (20) mindestens teilweise ausbildet.

9. Getriebeeinrichtung nach einem der Ansprüche 6 bis 8, wobei das Ende (8a) des Schlauchs (8) den Flansch (20) mindestens teilweise ausbildet.

## Claims

1. Transmission device (6) for a vehicle , comprising:
- a gearbox (4) housed in a gearbox casing (5),
- an actuator arranged in the gearbox housing (5), in particular a parking lock actuator (27) with a pawl (28) which can be brought into engagement with a locking tooth (29) of a parking lock wheel (30) of the gearbox (4),
- a pressure equalisation device for connecting the interior of the actuator to the atmosphere prevailing outside the gearbox housing (5),
the pressure equalisation device comprises a hose (8) extending outside the gearbox housing (5), which opens into a connector (10) arranged on the outside of the gearbox housing (5), **characterised in** th , a flange (20) is formed at the end (8a) of the hose (8) in such a way that the hose (8) is fixed in the longitudinal direction within the connector (10), wherein
the connector (10) comprises a retaining element (13) designed as a sliding part, which is configured for insertion into a housing of the connector (10) and can be moved by a sliding motion between a first and a second position in order to secure the position of the hose (8) in the longitudinal direction, wherein the retaining element (13) has a slot (13a),
wherein the slot (13a) has a first width (13b) that allows insertion of the flange (20) when the retaining element (13) is in said first position, and a second width (13c), which is smaller than the first width (13b), to prevent insertion or displacement of the flange (20) when the retaining element (13) is in said second position.

2. A transmission device according to claim 1, wherein the flange (20) is received in a corresponding recess of the connector (10).

3. A transmission device according to one of the preceding claims, wherein a cable harness (9) is attached to the connector (10), in which the hose (8) is at least partially accommodated, wherein the cable harness (9) comprises a plurality of electrical wires (18) which are connected via the connector (10) inside the transmission (4), preferably to the actuator.

4. Transmission device according to claim 3, wherein the electrical wires (18) also have a flange (17) such that they are secured by the retaining element (13).

5. A transmission device according to one of the preceding claims, wherein the hose (8) is surrounded by a tubular single-core seal (22), and wherein the single-core seal (22) received in the connector (10) forms a seal between the hose (8) and the connector (10) .

6. A transmission device according to claim 5, comprising a clamping element (23, 24), in particular made of a metallic material, wherein the single-core seal (22) is connected to the hose (8) by crimping the clamping element (23, 24).

7. A transmission device according to claim 6, wherein the clamping element (23, 24) has a first section extending in the longitudinal direction of the hose (8) and two spaced-apart, perpendicular thereto, projecting on one or both sides (25, 26), which, in the crimped state, surround the hose (8) or the individual core seal (22).

8. Transmission device according to claim 6 or 7, wherein an end (31) of the clamping element (24) pointing towards the free end of the hose (8) surrounds the end (8a) of the hose (8) and at least partially forms the flange (20).

9. A transmission device according to any one of claims 6 to 8, wherein the end (8a) of the hose (8) at least partially forms the flange (20).

## Revendications

1. Dispositif de transmission (6) pour un véhicule , comprenant :
- une boîte de vitesses (4) logée dans un carter de boîte de vitesses (5),
- un actionneur disposé dans le carter de boîte de vitesses (5), en particulier un actionneur de blocage de stationnement (27) comportant un cliquet (28) pouvant s'engager dans une denture de blocage (29) d'une roue de blocage de stationnement (30) de la boîte de vitesses (4),
- un dispositif d'équilibrage de pression destiné à relier l'espace intérieur de l'actionneur à l'atmosphère régnant à l'extérieur du carter de boîte de vitesses (5), le dispositif d'équilibrage de pression comprenant un tuyau (8) s'étendant à l'extérieur du carter de boîte de vitesses (5), qui débouche dans un connecteur (10) disposé sur la face extérieure du carter de boîte de vitesses (5), **caractérisé en ce qu'** une bride (20) est formée à l'extrémité (8a) du tuyau (8) de telle sorte que le tuyau (8) soit fixé dans le sens longitudinal dans le raccord (10),
le connecteur (10) comporte un élément de blocage (13) conçu comme une pièce coulissante, qui est conçu pour être inséré dans un boîtier du connecteur (10) et qui peut être déplacé par un mouvement coulissant entre une première et une deuxième position afin de bloquer la position du tuyau (8) dans le sens longitudinal, l'élément de fixation (13) comportant une fente (13a),
la fente (13a) ayant une première largeur (13b) qui permet l'insertion de la bride (20) lorsque l'élément de fixation (13) se trouve dans ladite première position, et une deuxième largeur (13c) qui est inférieure à la première largeur (13b) afin d'empêcher l'insertion ou le déplacement de la bride (20) lorsque l'élément de fixation (13) se trouve dans ladite deuxième position.

2. Dispositif de transmission selon la revendication 1, dans lequel la bride (20) est logée dans un évidement correspondant du connecteur (10).

3. Dispositif de transmission selon l'une des revendications précédentes, dans lequel un faisceau de câbles (9) est fixé au connecteur (10), dans lequel le tuyau (8) est au moins partiellement logé, le faisceau de câbles (9) comprenant une pluralité de conducteurs électriques (18) qui sont raccordés via le connecteur (10) à l'intérieur de la boîte de vitesses (4), de préférence à l'actionneur.

4. Dispositif de transmission selon la revendication 3, dans lequel les conducteurs électriques (18) comportent également une bride (17), de sorte qu'ils sont maintenus par l'élément de fixation (13).

5. Dispositif de transmission selon l'une des revendications précédentes, dans lequel le tuyau (8) est entouré d'un joint tubulaire (22) pour conducteur individuel, et dans lequel le joint (22) pour conducteur individuel logé dans le connecteur (10) assure l'étanchéité entre le tuyau (8) et le connecteur (10) .

6. Dispositif de transmission selon la revendication 5, comprenant un élément de serrage (23, 24), notamment en métal, le joint d'étanchéité pour conducteur individuel (22) étant relié au tuyau flexible (8) par sertissage de l'élément de serrage (23, 24).

7. Dispositif de transmission selon la revendication 6, dans lequel l'élément de serrage (23, 24) présente une première partie s'étendant dans la direction longitudinale du tuyau (8) et deux parties espacées l'une de l'autre, perpendiculaires à celle-ci et s'étendant d'un côté ou des deux côtés (25, 26), qui, à l'état serti, entourent le tuyau (8) ou le joint d'étanchéité de conducteur individuel (22).

8. Dispositif de transmission selon la revendication 6 ou 7, dans lequel une extrémité (31) de l'élément de serrage (24), orientée vers l'extrémité libre du tuyau (8), entoure l'extrémité (8a) du tuyau (8) et forme au moins partiellement la bride (20).

9. Dispositif de transmission selon l'une des revendications 6 à 8, dans lequel l'extrémité (8a) du tuyau (8) forme au moins partiellement la bride (20).
